# EUROPÄISCHE PATENTSCHRIFT

(11) **EP 3 165 080 B1**
(45) Veröffentlichungstag und Bekanntmachung des Hinweises auf die Patenterteilung: **12.12.2018**
(21) Anmeldenummer: 16195698.2
(22) Anmeldetag: 26.10.2016
(51) Int. Cl.: A01G 22/10, A01G 13/02

(54) **VERFAHREN UND INFORMATIONSSYSTEM ZUM ERKENNEN EINER LAGE EINER FOLIE IN EINEM ZU ÜBERWACHENDEN BEREICH**
METHOD AND INFORMATION SYSTEM FOR DETECTING A STATUS OF A FILM IN A REGION TO BE MONITORED
PROCÉDÉ ET SYSTÈME D'INFORMATIONS DESTINÉS À RECONNAÎTRE L'ÉTAT D'UN FILM DANS UNE ZONE À SURVEILLER

(30) Priorität: 05.11.2015 DE 102015221728
(43) Veröffentlichungstag der Anmeldung: 10.05.2017
(73) Patentinhaber: ROBERT BOSCH GMBH, 70442 Stuttgart (DE)
(72) Erfinder: Lasarczyk, Christian, 71732 Tamm (DE); Ferhadbegovic, Bojan, 70372 Stuttgart (DE); Glunk, Christian, 71272 Renningen (DE); Penndorf, Timo, 71111 Waldenbuch (DE); Lens, Thomas, 71067 Sindelfingen (DE)

(56) Entgegenhaltungen:
- DE-A1-102004 004 675
- UNKNOWN: "Mehr Informationen für Landwirte: Sensorlösung für den Spargelanbau von Bosch erhält Auszeichnung", Bosch Deepfield Robotics , 9. September 2015 (2015-09-09), XP002768626, Gefunden im Internet: URL:https://www.deepfield-robotics.com/de/ News-Detail_150909.html [gefunden am 2017-03-23]
- GRAEFE ET AL: "Computergestuetzt die Dammtemperatur und den Spargelertrag vorhersagen", GEMÜSE : DAS MAGAZIN FÜR DEN PROFESSIONELLEN GEMÜSEBAU, DT. LANDWIRTSCHAFTSVERL ; ULMER, DE , Bd. 45, Nr. 4 1. April 2009 (2009-04-01), Seiten 44-46, XP008183815, ISSN: 0016-6286 Gefunden im Internet: URL:https://www.gemuese-online.de/Archiv/P DF-Archiv/Computergestuetzt-die-Dammtemper atur-und-den-Spargelertrag-vorhersagen,QUl EPTk2NzYzOCZNSUQ9MTA5Njk1.html?UID=A0AB5A0 BFCF721E6A621C6E77C4F03A2F0F65F21B0452C [gefunden am 2017-03-21]

## Beschreibung

### Stand der Technik

Die Erfindung geht aus von einer Vorrichtung oder einem Verfahren nach Gattung der unabhängigen Ansprüche. Gegenstand der vorliegenden Erfindung ist auch ein Computerprogramm.

Für den Gemüseanbau, insbesondere den Spargelanbau werden Folien, d. h.Planen oder allgemein flexible oder biegbare flächige Abdeckelemente verwendet, um eine Bodentemperatur zugunsten vorteilhafter Wachstumsverhältnisse für das Gemüse beziehungsweise den Spargel zu beeinflussen, siehe z.B. die DE 10 2004 004675 A1. Dabei kann als Folie beispielsweise eine Sonnenstrahlen absorbierende Folie verwendet werden, um sich zu erwärmen und hierdurch die Temperatur eines angrenzenden Bodens zu erhöhen. Ebenso kann eine reflektierende Folie verwendet werden, um den Anstieg der Bodentemperatur zu verlangsamen. Eine Art beziehungsweise Ausrichtung der Folie kann optisch erfasst werden.

### Offenbarung der Erfindung

Vor diesem Hintergrund werden mit dem hier vorgestellten Ansatz ein Verfahren, weiterhin ein Informationssystem, das dieses Verfahren verwendet, sowie schließlich ein entsprechendes Computerprogramm gemäß den Hauptansprüchen vorgestellt. Durch die in den abhängigen Ansprüchen aufgeführten Maßnahmen sind vorteilhafte Weiterbildungen und Verbesserungen der im unabhängigen Anspruch angegebenen Vorrichtung möglich.

Wenn eine Anbaufläche für das Gemüse beziehungsweise den Spargel abgelegen ist, ist es zum Überprüfen der Lage der Folie (die im Nachfolgenden auch synonym als Folienlage bezeichnet werden kann) beziehungsweise der Ausrichtung der Folie erforderlich, zu der Anbaufläche zu fahren. Durch den hier vorgestellten Ansatz kann die Lage der Folie beziehungsweise Ausrichtung aus der Ferne überprüft werden.

Beim Spargelanbau beziehungsweise Gemüseanbau können Bodentemperatursensoren verwendet werden, um die Wachstumsbedingungen für den Spargel beziehungsweise das Gemüse zu überwachen. Beispielsweise kann eine erntegefährdende Temperatur erkannt werden und Gegenmaßnahmen eingeleitet werden.

Zum Erkennen der Folienlage kann auf die gleichen Informationen des Bodentemperatursensors zurückgegriffen werden, da die Folie die Bodentemperatur direkt beeinflusst.

Es wird ein Verfahren zum Erkennen einer Lage einer Folie in einem zu überwachenden Bereich vorgestellt, wobei das Verfahren die folgenden Ansprüche aufweist:
Einlesen zumindest eines Temperaturwerts in dem zu überwachenden Bereich und einer Wetterinformation, die zumindest einen Wert einer Lufttemperatur in einer Umgebung des zu überwachenden Bereichs umfasst; und

Bestimmen einer, die Lage einer Folie repräsentierende Folienlageinformation unter Verwendung des zumindest einen Temperaturwerts und der Wetterinformation, um die Lage der Folie zu erkennen.

Dieses Verfahren kann beispielsweise in Software oder Hardware oder in einer Mischform aus Software und Hardware beispielsweise in einem Steuergerät implementiert sein.

Unter einem zu überwachenden Bereich kann eine Anbaufläche beziehungsweise ein Areal um einen Bodentemperatursensor verstanden werden, insbesondere in dem ein landwirtschaftliches Produkt wie beispielsweise Gemüse oder speziell Spargel angebaut wird. Eine Folie kann eine Kunststofffolie sein. Die Folie kann eine absorbierende Seite und eine reflektierende Seite aufweisen. Der zu überwachende Bereich entspricht dabei einem durch die Folie abdeckbaren oder abgedeckten Bereich. Eine Folienlage kann eine Lage der Folie repräsentieren. Beispielsweise kann die Folienlage charakterisieren, welche Seite der Folie sonnenzugewandt ist.

Ein Folienfreilagewert, kann als Folienlageinformation bestimmt werden, wenn ein Verlauf des Temperaturwerts im Wesentlichen einem Verlauf der Lufttemperatur entspricht. Der Folienfreilagewert kann somit eine den zu überwachenden Bereich nicht abdeckende Lage der Folie repräsentieren. Wenn der zu überwachende Bereich auf- oder abgedeckt ist, können Umwelteinflüsse unmittelbar auf den Boden wirken. Beispielsweise kann die Folie aus dem zu überwachenden Bereich zurückgeschlagen sein oder aus dem zu überwachenden Bereich herausgeweht worden sein. Durch eine Erkennung, dass keine Folie den zu überwachenden Bereich abdeckt, kann ein Nutzer des hier vorgeschlagenen Ansatzes reagieren, falls dieser Zustand ungewollt ist.

Ein Absorbierwert als Folienlageinformation kann bestimmt werden, wenn der Temperaturwert höher als die Lufttemperatur ist. Der Absorbierwert kann eine Lage der Folie in dem zu überwachenden Bereich repräsentieren, in der die Folie mehr Wärmestrahlung absorbiert als reflektiert. Insbesondere kann der Absorbierwert eine sonnenzugewandte absorbierende Seite der Folie als Lage der Folie repräsentieren. Eine absorbierende Seite der Folie kann beispielsweise schwarz sein. Durch die schwarze Farbe wird einfallendes Sonnenlicht mit einem hohen Wirkungsgrad in Wärme umgewandelt. Dadurch kann die Folienlageinformation, die eine absorbierende Lage der Folie in dem zu überwachenden Bereich repräsentiert, einfach und sicher bereitgestellt werden.

Ein Reflektierwert als Folienlageinformation kann bestimmt werden, wenn ein Verlauf des Temperaturwerts gegenüber einem Verlauf der Lufttemperatur einen Zeitversatz aufweist. Der Reflektierwert kann eine reflektierende Lage der Folie in dem zu überwachenden Bereich repräsentieren, in der die Folie mehr Wärmestrahlung reflektiert als absorbiert. Insbesondere kann der Reflektierwert eine sonnenzugewandte reflektierende Seite der Folie repräsentiert repräsentieren. Eine reflektierende Seite der Folie kann beispielsweise weiß sein. Durch die weiße Farbe wird ein großer Anteil des einfallenden Sonnenlichts vom Boden weg reflektiert. Die Folie schützt den Boden jedoch weiterhin beispielsweise vor Wind. Dadurch ist die Temperatur am Boden höher, als die Lufttemperatur, steigt jedoch langsamer an, als die Lufttemperatur.

Ein Tunnelwert als Folienlageinformation kann bestimmt werden, wenn ein Verlauf des Temperaturwerts gegenüber einem Verlauf der Lufttemperatur einen Zeitversatz aufweist und/oder in seiner Amplitude gedämpft ist. Der Tunnelwert kann eine Lage der Folie als einen durch die Folien gebildeten Tunnel über dem zu überwachenden Bereich repräsentieren. Hierbei kann zwischen dem Boden des zu überwachenden Bereichs und der Folie ein Luftspalt vorhanden sein, insbesondere wobei dieser Luftspalt eine Mindestgröße von beispielsweise 10 cm oder auch mehr als einem Meter oder zwei (als begehbarer Tunnel) aufweist. Der Tunnel kann aus einer transparenten Folie bestehen. Der Tunnel schützt den zu überwachenden Bereich vor Auskühlung durch Wind. Ebenso stellt die Luft in dem Tunnel einen Wärmepuffer dar, der zuerst aufgewärmt wird, bevor der Boden aufgewärmt wird. Dadurch ergibt sich eine zeitliche Verzögerung der Erwärmung.

Der Folienfreilagewert, der Absorbierwert, der Reflektierwert und/oder der Tunnelwert kann hierbei ein Datenwert oder Flag-Wert sein, der in Abhängigkeit von dem jeweils vorstehend genannten Kriterium gesetzt oder mit einem numerischen Wert versehen wird, um die Folienlageinformation zu bilden.

Als Wetterinformation kann ferner ein Wert einer Windstärke eingelesen werden. Die Temperatur des Bodens in dem zu überwachenden Bereich wird stark durch den darüberstreichenden Wind beeinflusst. Eine Folie in dem zu überwachenden Bereich schirmt den Boden vor dem Wind ab. Wenn aufgrund der Windstärke der Temperaturwert niedriger sein sollte, als er tatsächlich ist, kann das Vorhandensein der Folie bzw. eine Lage der Folie auf dem zu überwachenden Bereich erkannt werden, auch wenn keine Sonne scheint.

Als Wetterinformation kann ferner ein Wert einer Sonneneinstrahlung eingelesen werden. Der Wert der Sonneneinstrahlung repräsentiert eine Intensität der Sonneneinstrahlung auf den Boden in dem zu überwachenden Bereich. Je stärker die Sonne scheint, umso stärker beeinflusst die Folie den Temperaturwert. Durch den Wert der Sonneneinstrahlung kann die Lage der Folie besonders sicher erkannt werden.

Der hier vorgestellte Ansatz schafft ferner ein Informationssystem, das ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form eines Informationssystems kann die der Erfindung zugrunde liegende Aufgabe schnell und effizient gelöst werden.

Hierzu kann das Informationssystem zumindest eine Recheneinheit zum Verarbeiten von Signalen oder Daten, zumindest eine Speichereinheit zum Speichern von Signalen oder Daten, zumindest eine Schnittstelle zu einem Sensor oder einem Aktor zum Einlesen von Sensorsignalen von dem Sensor oder zum Ausgeben von Steuersignalen an den Aktor und/oder zumindest eine Kommunikationsschnittstelle zum Einlesen oder Ausgeben von Daten aufweisen, die in ein Kommunikationsprotokoll eingebettet sind. Die Recheneinheit kann beispielsweise ein Signalprozessor, ein Mikrocontroller oder dergleichen sein, wobei die Speichereinheit ein Flash-Speicher, ein EPROM oder eine magnetische Speichereinheit sein kann. Die Kommunikationsschnittstelle kann ausgebildet sein, um Daten drahtlos und/oder leitungsgebunden einzulesen oder auszugeben, wobei eine Kommunikationsschnittstelle, die leitungsgebundene Daten einlesen oder ausgeben kann, diese Daten beispielsweise elektrisch oder optisch aus einer entsprechenden Datenübertragungsleitung einlesen oder in eine entsprechende Datenübertragungsleitung ausgeben kann.

Unter einem Informationssystem kann vorliegend ein elektrisches Gerät verstanden werden, das Sensorsignale verarbeitet und in Abhängigkeit davon Steuer- und/oder Datensignale ausgibt. Das Informationssystem kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen des Steuergeräts beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Besonders vorteilhaft kann das Informationssystem im Zusammenhang mit einer Überwachungseinheit in der Landwirtschaft bzw. im Gemüseanbau verwendet werden. Hierbei können die Einheiten des Informationssystems eine Schnittstelle zum Einlesen oder eine Einrichtung zum Bestimmen der Folienlage vorgesehen sein.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Ausführungsbeispiele der Erfindung sind in den Zeichnungen dargestellt und in der nachfolgenden Beschreibung näher erläutert. Es zeigt:
Fig. 1 eine Darstellung eines Informationssystems zum Erkennen einer Folienlage in einem zu überwachenden Bereich gemäß einem Ausführungsbeispiel;
Fig. 2 ein Blockschaltbild eines Informationssystems zum Erkennen einer Folienlage in einem zu überwachenden Bereich gemäß einem Ausführungsbeispiel;
Fig. 3 eine vereinfachte Darstellung eines Informationssystems zum Erkennen einer Folienlage in einem zu überwachenden Bereich gemäß einem Ausführungsbeispiel;
Fig. 4 eine Darstellung von Temperaturverläufen unter einer Folie in Abhängigkeit von der Sonneneinstrahlung; und
Fig. 5 ein Ablaufdiagramm eines Verfahrens zum Erkennen einer Folienlage in einem zu überwachenden Bereich gemäß einem Ausführungsbeispiel.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

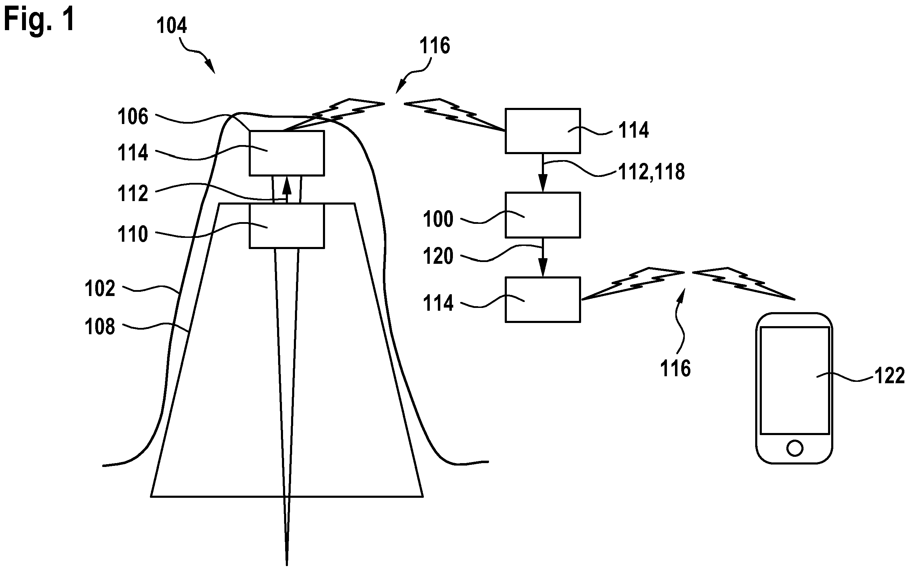

Fig. 1 zeigt eine Darstellung eines Informationssystems 100 zum Erkennen einer Lage einer Folie 102 (beziehungsweise Folienlage) in einem zu überwachenden Bereich 104 gemäß einem Ausführungsbeispiel. Eine Temperatursensorvorrichtung 106 ist in dem zu überwachenden Bereich 104 angeordnet und dazu ausgebildet, eine Bodentemperatur in dem zu überwachenden Bereich 104 zu messen. Dazu weist die Temperatursensorvorrichtung 106 einen Dorn zum Einstecken in den Boden 108 auf. An dem Dorn ist zumindest ein Temperatursensor 110 angeordnet. Wenn der Dorn in den Boden 108 eingesteckt ist, befindet sich der Temperatursensor 110 an einer Oberfläche des Bodens 108. Die Temperatursensorvorrichtung 106 ist hier von der Folie 102 bedeckt. Der Boden 108 ist hier ein Spargeldamm 108. Der Spargeldamm 108 kann zur Temperaturregelung durch die Folie 102 abgedeckt sein. Dabei kann eine absorbierende Seite oder eine reflektierende Seite der Folie nach oben, also in Richtung der Sonne oder vom Boden weg, weisen. Der Spargeldamm 108 kann auch folienfrei sein. Ebenso kann über mehreren nebeneinanderliegenden Spargeldämmen 108 ein Folientunnel errichtet sein. Die Temperatursensorvorrichtung 106 ist in den Spargeldamm 108 eingesteckt und erfasst die Oberflächentemperatur des Spargeldamms 108. Der Temperatursensor 110 bildet die Oberflächentemperatur in einem Temperaturwert 112 ab. Der Temperatursensor 110 ist mit einer Kommunikationseinrichtung 114 der Temperatursensorvorrichtung 106 verbunden. Die Kommunikationseinrichtung 114 der Temperatursensorvorrichtung 106 ist hier zwischen der Oberfläche des Bodens 108 und der Folie 102 angeordnet. Die Kommunikationseinrichtung 114 ist dazu ausgebildet, eine drahtlose Kommunikation 116 zu einer weiteren Kommunikationseinrichtung 114, die mit dem Informationssystem 100 verbunden ist, aufzubauen. Der Temperaturwert 112 wird unter Verwendung eines Kommunikationsprotokolls von der Kommunikationseinrichtung 114 zu der weiteren Kommunikationseinrichtung 114 übermittelt. Die weitere Kommunikationseinrichtung 114 stellt den Temperaturwert 112 für das Informationssystem 100 bereit.

Das Informationssystem 100 verwendet den Temperaturwert 112, um die Ausrichtung der Folie 102 zu erkennen. Dazu wird der Temperaturwert 112 mit einem Umgebungstemperaturwert 118 verglichen. In diesem Ausführungsbeispiel wird der Umgebungstemperaturwert 118 von der weiteren Kommunikationseinrichtung 114 von einem nicht dargestellten Umgebungstemperatursensor eingelesen.

Wenn die Folie 102 mit der absorbierenden Seite nach oben, also zur Sonne liegt, dann erwärmt sich der Boden 108 unter der Folie 102 schneller als die Umgebungstemperatur. Wenn die Folie 102 mit der reflektierenden Seite nach oben liegt, dann erwärmt sich der Boden 108 unter der Folie 102 langsamer als die Umgebungstemperatur. Wenn der Boden 108 nicht durch die Folie 102 abgedeckt ist, entspricht die Bodentemperatur im Wesentlichen der Umgebungstemperatur.

Die Folienlage beziehungsweise die Ausrichtung der Folie 102 wird in einer Folienlageinformation 120 abgebildet, sie beispielsweise ein Datensatz oder ein physikalisch messbares Signal sein kann. Der Folienlageinformation 120 wird über eine weitere Kommunikationseinrichtung 114 und eine weitere drahtlose Verbindung 116 an ein mobiles Gerät 122 übermittelt. Auf dem mobilen Gerät 122 wird die Folienlageinformation 120 dargestellt.

Es wird eine Identifikation der Folienlage auf Grundlage von Temperaturmessungen 112 und Wetterinformationen 118 vorgestellt.

Die Folienlage auf Spargeldämmen 108 im Speziellen und Gemüse im Allgemeinen hat Einfluss auf den Ertragszeitpunkt, den Ertrag und der Ertragsqualität. Um die aktuelle Folienlage zu überprüfen, kann der Landwirt auf die Felder hinausfahren und die Folienlage selber in Augenschein nehmen.

Der hier vorgestellte Ansatz erlaubt eine Ermittlung der Folienlage auf der Grundlage von Temperaturschwankungen in dem für gewöhnlich von der Folie 102 bedeckten Bereich 104. Folienlagen können beispielsweise die Abdeckung mit einer schwarzen oder weißen Folie 102 sein, das Abnehmen sämtlicher Folien oder das zusätzliche Aufbringen eines Tunnels.

Die Folienlage kann einzig auf der Grundlage von Temperatursensoren 110 ermitteln werden. Temperatursensoren 110 erlauben im landwirtschaftlichen Umfeld auch die Verwendung in weiteren Dienstleistungen derselben Anwendung.

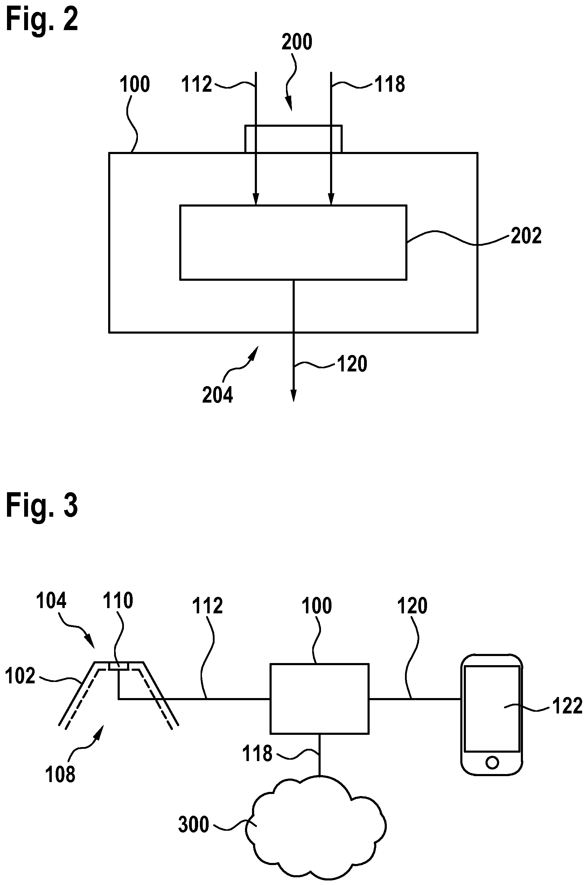

Fig. 2 zeigt ein Blockschaltbild eines Informationssystems 100 zum Erkennen einer Lage einer Folien in einem zu überwachenden Bereich gemäß einem Ausführungsbeispiel. Das Informationssystem 100 entspricht im Wesentlichen dem in Fig. 1 dargestellten Informationssystem. Das Informationssystem 100 weist eine Schnittstelle 200 zum Einlesen und eine Bestimmungseinrichtung 202 auf. Die Schnittstelle 200 ist dazu ausgebildet, einen Temperaturwert 112 aus dem zu überwachenden Bereich und eine Wetterinformation 118 einzulesen. Die Wetterinformation 118 umfasst zumindest einen Wert einer Lufttemperatur in einer Umgebung des überwachenden Bereichs. Die Bestimmungseinrichtung ist dazu ausgebildet, eine Folienlageinformation 120 unter Verwendung des Temperaturwerts 112 und der Wetterinformation 118 zu bestimmen. Die Folienlageinformation 120 repräsentiert die Lage der Folie bzw. Folienlage in dem zu überwachenden Bereich. Eine Schnittstelle 204 zum Ausgeben gibt die Folienlageinformation 120 aus.

Fig. 3 zeigt eine vereinfachte Darstellung eines Informationssystems 100 zum Erkennen einer Folienlage in einem zu überwachenden Bereich 104 gemäß einem Ausführungsbeispiel. Das Informationssystem 100 entspricht im Wesentlichen der Darstellung in Fig. 1. Im Gegensatz dazu ist der Temperatursensor 110 hier in dem zu überwachenden Bereich 104 ohne Dorn auf den Boden 108 aufgelegt. Eine Datenübertragung des Temperaturwerts 112 zum Informationssystem 100 ist hier vereinfacht durch eine direkte Verbindung dargestellt. Ebenso ist die Datenübertragung der Folienlageinformation 120 zum mobilen Gerät 122 vereinfacht durch eine direkte Verbindung dargestellt. Die Wetterinformation 118 liest das Informationssystem 100 hier aus einem übergeordneten Datennetzwerk 300 ein. Das Datennetzwerk 300 kann als Cloud beziehungsweise Internet bezeichnet werden. Die Wetterinformation kann 118 eine lokale Wettervorhersage und alternativ oder ergänzend in der Nähe erfasste Wetterwerte umfassen. Beispielsweise kann die Wetterinformation 118 eine, einen Wert einer Windstärke in der Umgebung repräsentierende Windstärkeinformation umfassen. Ebenso kann die Wetterinformation 118 eine, eine Intensität der Sonneneinstrahlung in der Umgebung repräsentierende Sonneneinstrahlungsinformation umfassen. Die Wetterinformation 118 kann auch einen eine voraussichtlich zu erreichende Temperatur repräsentierenden Temperaturvorhersagewert und/oder einen eine voraussichtlich zu erreichende Sonnenscheindauer beziehungsweise Strahlungsintensität repräsentierenden Sonnenscheinvorhersagewert umfassen.

Wenn der zu überwachende Bereich 104 nicht durch die Folie 102 abgedeckt ist, wird der erfasste Temperaturwert 112 im Wesentlichen der Umgebungstemperatur entsprechen.

Wenn eine der Sonne zugewandte Folienseite eine dunkle Farbe aufweist, beispielsweise schwarz, werden die Sonnenstrahlen durch die Folie 102 zu einem hohen Anteil absorbiert und in Wärme umgewandelt. Dadurch stellt sich zwischen der Folie 102 und dem Boden 108 eine höhere Temperatur ein, als die Umgebungstemperatur. Eine absorbierende Folie 102 erreicht in kurzer Zeit hohe Temperaturen.

Wenn die der Sonne zugewandte Folienseite eine helle Farbe aufweist, beispielsweise weiß, werden die Sonnenstrahlen durch die Folie 102 zu einem hohen Anteil reflektiert. Dadurch stellt sich zwischen der Folie 102 und dem Boden eine geringfügig höhere Temperatur ein, als die Umgebungstemperatur. Eine reflektierende Folie 102 wird weniger schnell heiß, als eine absorbierende Folie 102.

Die Folie 102 kann eine Kunststofffolie 102 sein, die eine weiße Seite und eine schwarze Seite aufweist. Dadurch kann die Folie 102 je nach gewünschter Bodentemperatur 112 gewendet werden.

Die Folie 102 kann auch transparent sein. Eine transparente Folie 102 kann als begehbarer Folientunnel den zu überwachenden Bereich 104 überspannen. Der Folientunnel schließt ein windgeschütztes Luftpolster ein, das ausgleichend auf die Bodentemperatur wirkt. Durch den Folientunnel wird die Bodentemperatur über der Umgebungstemperatur liegen, jedoch eine Zeitverzögerung zu einem starken Anstieg der Umgebungstemperatur aufweisen. In umgekehrter Richtung wird die Bodentemperatur im Folientunnel durch die isolierende Wirkung des Luftpolsters bei sinkender Umgebungstemperatur langsamer sinken, als die Umgebungstemperatur.

In Fig. 3 sind schematisch die Informationsquellen 110, 300 und die dargestellte beziehungsweise daraus abgeleitete Information 120 dargestellt. Zur Ermittlung der Folienlage wird die aktuelle Temperatur unter der Folie 102 ins Verhältnis zu aktuellen Außentemperatur gesetzt. Bei Bedarf kann die Zuverlässigkeit der Aussage erhöht werden, indem die Sonneneinstrahlung oder die Windstärke in dem Modell berücksichtigt wird. Die aktuelle Außentemperatur, die Sonneneinstrahlung und die Windstärke können von eigenen Sensoren erfasst werden oder können von Wetterdiensten im Internet 300 abgefragt werden. Die Temperatur unter der Folie 102 wird durch eine Temperaturerfassungsvorrichtung 110 gemessen. Ohne Folie 102 folgt die gemessene Temperatur relativ direkt der Außentemperatur. Bei einer von Erdreich 108 abgewandten schwarzen Folienseite ist bei Sonneneinstrahlung die Temperatur unter der Folie 102 wesentlich höher als die Außentemperatur. Bei einer von Erdreich 108 abgewandten weißen Folienseite folgt die gemessene Temperatur mit einer Verzögerung der Außentemperatur. Ein zusätzlicher Tunnel führt zu einer verzögerten Schwankung gegenüber der Außenwelt und einer deutlichen Dämpfung. Die Sicherheit beziehungsweise Genauigkeit, mit der eine Aussage über die Folienlage getroffen werden kann, hängt von den äußeren Umweltbedingungen ab. Diese Sicherheit kann noch zusätzlich dargestellt werden.

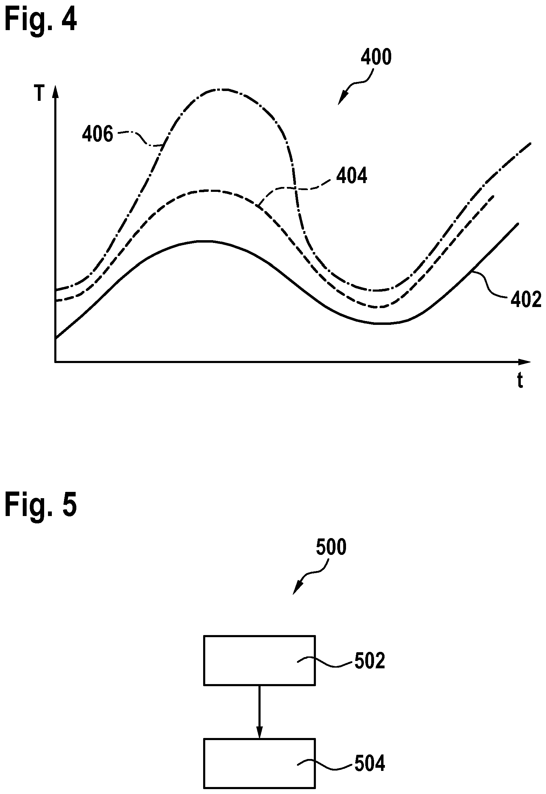

Fig. 4 zeigt eine Darstellung von Temperaturverläufen 400 unter einer Folie in Abhängigkeit von der Sonneneinstrahlung. Die Temperaturverläufe 400 sind in einem Zeit-Temperatur-Diagramm dargestellt, welches auf der Abszisse die Zeit t und auf der Ordinate die Temperatur T aufgetragen hat. Die Temperaturverläufe 400 repräsentieren einen Tagesgang der Temperatur. Dabei sind die Temperaturen am Morgen niedrig, steigen zum Zeitpunkt der höchsten Sonneneinstrahlung, insbesondere mittags, auf einen Maximalwert und fallen zum Abend hin wieder ab. Ein Minimalwert wird nachts erreicht.

Der Tagesgang ist bei allen Temperaturverläufen 400 ähnlich. Ein Umgebungstemperaturverlauf 402 weist dabei die geringste Amplitude auf. Die Verläufe 404, 406 repräsentieren Bodentemperaturen, die beispielsweise durch eine Temperatursensorvorrichtung, wie Sie in Fig. 1 dargestellt ist, erfasst werden. Die Temperatursensorvorrichtung ist dabei wie in Fig. 1 zwischen einer Folie und dem Boden angeordnet. Durch die Folie sind die Bodentemperaturen höher, als die Umgebungstemperatur. Der Unterschied zur Umgebungstemperatur ist dabei bei einer absorbierenden Folie größer, als bei einer reflektierenden Folie.

Wenn der zu überwachenden Bereich nicht durch eine Folie abgedeckt ist, entspricht die Bodentemperatur im Wesentlichen der Umgebungstemperatur. So kann erkannt werden, ob der zu überwachenden Bereich durch eine Folie abgedeckt ist.

Mit anderen Worten zeigt Fig. 4 exemplarische Verläufe 400 der gemessenen Temperatur bei unterschiedlichen Folienlagen.

Fig. 5 zeigt ein Ablaufdiagramm eines Verfahrens 500 zum Erkennen einer Lage einer Folie in einem zu überwachenden Bereich gemäß einem Ausführungsbeispiel. Das Verfahren 500 kann auf einem Informationssystem ausgeführt werden, wie es beispielsweise in Fig. 2 dargestellt ist. Das Verfahren 500 weist einen Schritt 502 des Einlesens und einen Schritt 504 des Bestimmens auf. Im Schritt 502 des Einlesens werden ein in dem zu überwachenden Bereich erfasster Temperaturwert und eine Wetterinformation eingelesen. Die Wetterinformation umfasst zumindest einen Wert einer Lufttemperatur in einer Umgebung des zu überwachenden Bereichs. Im Schritt 504 des Bestimmens wird eine Folienlageinformation unter Verwendung des Temperaturwerts und der Wetterinformation bestimmt. Die Folienlageinformation repräsentiert dabei eine Lage der Folie in dem zu überwachenden Bereich.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren (500) zum Erkennen einer Lage einer Folie (102) in einem zu überwachenden Bereich (104), wobei der zu überwachende Bereich (104) eine Anbaufläche ist, in der ein landwirtschaftliches Produkt angebaut wird, wobei das Verfahren (500) die folgenden Schritte aufweist:
Einlesen (502) zumindest eines Bodentemperaturwerts (112) in dem zu überwachenden Bereich (104) und einer Wetterinformation (118), die zumindest einen Wert einer Lufttemperatur in einer Umgebung des zu überwachenden Bereichs (104) umfasst; und
Bestimmen (504) einer, die Lage der Folie (102) repräsentierende Folienlageinformation (120) unter Verwendung des zumindest einen Bodentemperaturwerts (112) und der Wetterinformation (118), um die Lage der Folie zu erkennen.

2. Verfahren (500) gemäß Anspruch 1, bei dem im Schritt (504) des Bestimmens ein Folienfreilagewert als Folienlageinformation (120) bestimmt wird, wenn ein Verlauf des Bodentemperaturwerts (112) im Wesentlichen einem Verlauf der Lufttemperatur entspricht, wobei der Folienfreilagewert eine den zu überwachenden Bereich (104) nicht abdeckende Lage der Folie (102) repräsentiert.

3. Verfahren (500) gemäß einem der vorangegangenen Ansprüche, bei dem im Schritt (504) des Bestimmens ein Absorbierwert als Folienlageinformation (120) bestimmt wird, wenn der Bodentemperaturwert (112) höher als die Lufttemperatur ist, wobei der Absorbierwert eine Lage der Folie (102) in dem zu überwachenden Bereich (104) repräsentiert, in der die Folie (102) mehr Wärmestrahlung absorbiert als reflektiert, insbesondere wobei der Absorbierwert eine sonnenzugewandte absorbierende Seite der Folie (102) als Lage der Folie (102) repräsentiert.

4. Verfahren (500) gemäß einem der vorangegangenen Ansprüche, bei dem im Schritt (504) des Bestimmens ein Reflektierwert als Folienlageinformation (120) bestimmt wird, wenn ein Verlauf des Bodentemperaturwerts (112) gegenüber einem Verlauf der Lufttemperatur einen Zeitversatz aufweist, wobei der Reflektierwert eine reflektierende Lage der Folie (102) in dem zu überwachenden Bereich (104) repräsentiert, in der die Folie (102) mehr Wärmestrahlung reflektiert als absorbiert, insbesondere wobei der Reflektierwert eine sonnenzugewandte reflektierende Seite der Folie (102) repräsentiert.

5. Verfahren (500) gemäß einem der vorangegangenen Ansprüche, bei dem im Schritt (504) des Bestimmens ein Tunnelwert als Folienlageinformation (120) bestimmt wird, wenn ein Verlauf des Bodentemperaturwerts (112) gegenüber einem Verlauf der Lufttemperatur einen Zeitversatz aufweist und/oder in seiner Amplitude gedämpft ist, wobei der Tunnelwert eine Lage der Folie (102) als einen durch die Folie gebildeten Tunnel über dem zu überwachenden Bereich (104) repräsentiert.

6. Verfahren (500) gemäß einem der vorangegangenen Ansprüche, bei dem im Schritt (502) des Einlesens als Wetterinformation (118) ferner ein Wert einer Windstärke eingelesen wird.

7. Verfahren (500) gemäß einem der vorangegangenen Ansprüche, bei dem im Schritt (502) des Einlesens als Wetterinformation (118) ferner ein Wert einer Sonneneinstrahlung eingelesen wird.

8. Informationssystem (100), das eingerichtet ist, das Verfahren gemäß einem der vorangegangenen Ansprüche in entsprechenden Einheiten (200, 202) auszuführen.

9. Computerprogramm, das dazu eingerichtet ist, das Verfahren gemäß einem der vorangegangenen Ansprüche auszuführen.

10. Maschinenlesbares Speichermedium, auf dem das Computerprogramm nach Anspruch 9 gespeichert ist.

## Claims

1. Method (500) for detecting a status of a film (102) in a region (104) to be monitored, wherein the region (104) to be monitored is an area under cultivation in which an agricultural product is cultivated, wherein the method (500) has the following steps:
reading (502) at least one ground temperature value (112) in the region (104) to be monitored and weather information (118), which comprises at least a value of an air temperature in an environment of the region (104) to be measured; and
determining (504) film status information (120) representing the status of the film (102) by using the at least one ground temperature value (112) and the weather information (118) in order to detect the status of the film.

2. Method (500) according to Claim 1, in which, in step (504) of the determination, a film exposure value is determined as film status information (120) if a profile of the ground temperature value (112) corresponds substantially to a profile of the air temperature, wherein the film exposure value represents a status of the film (102) that does not cover the region (104) to be monitored.

3. Method (500) according to one of the preceding claims, in which, in step (504) of the determination, an absorber value is determined as film status information (120) if the ground temperature value (112) is higher than the air temperature, wherein the absorber value represents a status of the film (102) in the region (104) to be monitored, in which the film (102) absorbs more thermal radiation than it reflects, in particular wherein the absorber value represents an absorbing side of the film (102) that faces the sun as status of the film (102).

4. Method (500) according to one of the preceding claims, in which, in step (504) of the determination, a reflection value is determined as film status information (120) if a profile of the ground temperature value (112) has a time offset with respect to a profile of the air temperature, wherein the reflection value represents a reflecting status of the film (102) in the region (104) to be monitored, in which the film (102) reflects more thermal radiation than it absorbs, in particular wherein the reflection value represents a reflecting side of the film (102) that faces the sun.

5. Method (500) according to one of the preceding claims, in which, in step (504) of the determination, a tunnel value is determined as film status information (120) if a profile of the ground temperature value (112) has a time offset with respect to a profile of the air temperature and/or is attenuated in its amplitude, wherein the tunnel value represents a status of the film (102) as a tunnel formed by the film over the region (104) to be monitored.

6. Method (500) according to one of the preceding claims, in which, in step (502) of the reading, a value of a wind strength is also read as weather information (118).

7. Method (500) according to one of the preceding claims, in which, in step (502) of the reading, a value of solar irradiation is also read as weather information (118).

8. Information system (100) which is set up to execute the method according to one of the preceding claims in appropriate units (200, 202).

9. Computer program which is set up to execute the method according to one of the preceding claims.

10. Machine-readable storage medium, on which the computer program according to Claim 9 is stored.

## Revendications

1. Procédé (500) de reconnaissance de la position d'un film (102) par rapport à une zone à surveiller (104), la zone à surveiller (104) étant une surface cultivable dans laquelle est cultivé un produit agricole, le procédé (500) comprenant les étapes suivantes :
relevé (502) d'au moins une valeur de température du sol (112) dans la zone à surveiller (104) et d'une information météorologique (118), laquelle comprend au moins une valeur d'une température de l'air dans un environnement de la zone à surveiller (104) ; et
détermination (504) d'une information de position de film (120) représentant la position du film (102) en utilisant l'au moins une valeur de température du sol (112) et l'information météorologique (118) afin de reconnaître la position du film.

2. Procédé (500) selon la revendication 1, selon lequel, à l'étape (504) de détermination, une valeur de libération de film est déterminée en tant qu'information de position de film (120) lorsqu'un tracé de la valeur de température du sol (112) correspond sensiblement à un tracé de la température de l'air, la valeur de libération de film représentant une position du film (102) qui ne recouvre pas la zone à surveiller (104).

3. Procédé (500) selon l'une des revendications précédentes, selon lequel, à l'étape (504) de détermination, une valeur d'absorption est déterminée en tant qu'information de position de film (120) lorsque la valeur de température du sol (112) est supérieure à la température de l'air, la valeur d'absorption représentant une position du film (102) dans la zone à surveiller (104) dans laquelle le film (102) absorbe plus de rayonnement calorifique qu'il n'en réfléchit, la valeur d'absorption représentant notamment en tant que position du film (102) un côté absorbant du film (102) qui fait face au soleil.

4. Procédé (500) selon l'une des revendications précédentes, selon lequel, à l'étape (504) de détermination, une valeur de réflexion est déterminée en tant qu'information de position de film (120) lorsqu'un tracé de la valeur de température du sol (112) présente un décalage dans le temps par rapport à un tracé de la température de l'air, la valeur de réflexion représentant une position réfléchissante du film (102) dans la zone à surveiller (104) dans laquelle le film (102) réfléchit plus de rayonnement calorifique qu'il n'en absorbe, la valeur de réflexion représentant notamment un côté réfléchissant du film (102) qui fait face au soleil.

5. Procédé (500) selon l'une des revendications précédentes, selon lequel, à l'étape (504) de détermination, une valeur de tunnel est déterminée en tant qu'information de position de film (120) lorsqu'un tracé de la valeur de température du sol (112) présente un décalage dans le temps par rapport à un tracé de la température de l'air et/ou est atténué dans son amplitude, la valeur de tunnel représentant une position du film (102) sous la forme d'un tunnel formé par le film au-dessus de la zone à surveiller (104).

6. Procédé (500) selon l'une des revendications précédentes, selon lequel, à l'étape (502) de relevé, une valeur d'une force du vent étant en plus relevée en tant qu'information météorologique (118).

7. Procédé (500) selon l'une des revendications précédentes, selon lequel, à l'étape (502) de relevé, une valeur d'un rayonnement solaire étant en plus relevée en tant qu'information météorologique (118).

8. Système d'information (100) qui est conçu pour mettre en oeuvre le procédé selon l'une des revendications précédentes dans des unités (200, 202) correspondantes.

9. Programme informatique qui est conçu pour mettre en oeuvre le procédé selon l'une des revendications précédentes.

10. Support d'enregistrement lisible par machine sur lequel est enregistré le programme informatique selon la revendication 9.
